# EUROPÄISCHE PATENTSCHRIFT

(11) **EP 3 234 082 B1**
(45) Veröffentlichungstag und Bekanntmachung des Hinweises auf die Patenterteilung: **04.04.2018**
(21) Anmeldenummer: 15816418.6
(22) Anmeldetag: 15.12.2015
(51) Int. Cl.: C11B 1/10, A23F 5/46, C11B 3/12

(54) **VERFAHREN ZUR EXTRAKTION VON ÖLHALTIGEN BESTANDTEILEN AUS KAFFEEBOHNEN UND/ODER RESTSTOFFEN DER KAFFEEPRODUKTION**
METHOD FOR THE EXTRACTION OF OILY COMPONENTS FROM COFFEE BEANS AND/OR OF RESIDUAL MATERIALS OF COFFEE PRODUCTION
PROCÉDÉ D'EXTRACTION DE CONSTITUANTS, CONTENANT DE L'HUILE, DE GRAINS DE CAFÉ ET/OU DE RÉSIDUS DE LA PRODUCTION DE CAFÉ

(30) Priorität: 15.12.2014 DE 102014225940
(43) Veröffentlichungstag der Anmeldung: 25.10.2017
(73) Patentinhaber: GCR - Global Commodity Resources UG (Haftungsbeschränkt), 01936 Neukirch OT Schmorkau (DE)
(72) Erfinder: GLISOVIC, Anja, 23562 Lübeck (DE); HANDRICK, Stefan, 01936 Neukirch OT Schmorkau (DE); HINRICHS, Frank, 26131 Oldenburg (DE)
(74) Vertreter: Kailuweit & Uhlemann Patentanwälte Partnerschaft mbB
(86) Internationale Anmeldenummer: PCT/EP2015/079739
(87) Internationale Veröffentlichungsnummer: WO 2016/096817

(56) Entgegenhaltungen:
- EP-A1- 0 693 547
- WO-A2-2009/015358
- US-A- 4 156 031
- US-B1- 8 273 248

## Beschreibung

Die vorliegende Erfindung betrifft ein Verfahren zur Extraktion von ölhaltigen Bestandteilen aus Kaffeebohnen und/oder Reststoffen der Kaffeeproduktion, die einen Restfeuchtegehalt aufweisen.

Der gegenwärtige Stand der Technik ist, dass Öl, insbesondere Pflanzenöl, entweder mittels Pressen oder Extraktion gewonnen wird. Zu diesem Zweck wird das ölhaltige Material zuerst getrocknet und gemahlen (konditioniert) und anschließend einer oder nacheinander beiden Methoden unterworfen. Üblicherweise wird im letzteren Fall zuerst gepresst und anschließend extrahiert. Wenn es sich um Materialien mit hohem Ölgehalt handelt, wie z.B. Rapssaat, hat Pressen den Vorteil, dass es technisch relativ einfach und hinreichend effizient ist, um kostendeckend und gewinnbringend eingesetzt zu werden. Durch Pressen können bis zu 90 % des Öls aus einem Material gewonnen werden. Nachteilig werden neben dem Öl auch Schwebstoffe ausgepresst, weshalb das Öl noch mehrere Reinigungsschritte durchlaufen muss.

Die Extraktion von Öl erfolgt üblicherweise mittels Hexan. Der Vorteil der Extraktion sind der hohe Wirkungsgrad und die Reinheit des Öls. Es können bis zu 98 % des Öls gewonnen werden, welches nach der Destillation des Extraktionsmittels rein vorliegt und normalerweise keiner weiteren Behandlung bedarf. Die Extraktion von Öl aus Pflanzenmaterialien mit Hexan als Lösungsmittel ist gegenwärtig der etablierte, industrielle Standard und hat zwei wesentliche Aspekte, welche die Ölausbeute direkt beeinflussen und damit die Effizienz und Wirtschaftlichkeit des Verfahrens. Der erste Aspekt ist die Lösungseffizienz, diese beschreibt wie viel Öl pro Menge Lösungsmittel und Extraktionsgut in welcher Zeit zugänglich ist und gelöst werden kann. Dieser Aspekt wird maßgeblich von der Art des Lösungsmittels, der Zusammensetzung des Öls, der Arbeitstemperatur, der Konditionierung des ölhaltigen Materials, dem Feuchtigkeitsgehalt und einigen weiteren, weniger wichtigen Faktoren beeinflusst. Der zweite Aspekt ist die Entzugsvollständigkeit des Lösungsmittel-Öl-Gemisches (Miscella) aus dem Extraktionsgut. Im Idealfall enthält das Material am Ende der Extraktion kein Öl mehr und nur noch reines Lösungsmittel, das in einem anschließenden Schritt wieder zurückgewonnen wird.

Technisch ermöglicht wird die Extraktion durch Extraktionsanlagen, die vom kleinen Soxhlet-Aufsatz im Labor bis zu industriellen Gegenstromanlagen reichen können. Von diesen sind Perkolationsanlagen der am häufigsten verwendete Extraktortyp für die Extraktion von Öl. Bei der Perkolation fließt eine Flüssigkeit getrieben durch die Schwerkraft durch ein poröses Materialbett auf einen Siebboden, ein Prinzip ähnlich dem Filtern von Kaffee. Während das Lösungsmittel (üblicherweise Hexan) nach unten durch das Bett aus ölhaltigem Material läuft (sickert), wird das Öl im Lösungsmittel gelöst, die Miscella entsteht, welche unterhalb des Siebbodens aufgefangen wird. In der Regel werden die Anlagen aus Brandschutzgründen bei leichtem Unterdruck und nahe dem Siedepunkt von Hexan bei 69 °C betrieben, so dass die temperaturabhängigen Lösung- und Diffusionsprozesses schnellst möglich ablaufen. Bei geeigneter Wahl der Flockengröße, der Restfeuchtigkeit, des Extraktionsmittels und der Temperatur kann hier eine Lösungseffizienz von 98-99 % erreicht werden. Dieses Prinzip ist allen Perkolationsanlagen gemein, allerdings sind durch die Notwendigkeit eine hinreichende Entzugsvollständigkeit und einen gewissen Materialdurchsatz zu erreichen, verschiedene Varianten von Perkolationsextraktionsanlagen entstanden, welche sich nach Hersteller und Anwendung stark unterscheiden. Gemeinsam ist ihnen allen, dass die Miscella mit dem höchsten Ölanteil immer am Anfang des Prozesses auf das Extraktionsgut gegeben wird, wenn dessen Ölgehalt ebenfalls am höchsten ist. Sukzessive wird dann die Miscella mit einem niedrigeren Ölanteil genutzt, um den Ölgehalt des Extraktionsgutes Schritt für Schritt zu reduzieren. Im letzten Schritt wird mit reinem Lösungsmittel gespült, das während der Perkolation durch das Material durch die Aufnahme von geringsten Mengen Öl die Miscella mit dem niedrigsten Ölanteil entstehen lässt. Anschließend wird das extrahierte Material ausgeschleust und das Extraktionsmittel durch Dampfdestillation aus dem entölten Extraktionsgut entfernt und zurückgewonnen.

In der einfachsten Form, den sogenannten Batchanlagen, welche wegen ihres geringen Materialdurchsatzes oft in Laboratorien und Forschungseinrichtungen zu finden sind, wie z.B. der SPX e&e Pilot-Extraktionsanlage, wird das Extraktionsgut in einen durchlässigen Siebkorb gegeben. Das Lösungsmittel wird von oben aufgebracht und kann durch das Material perkolieren. Durch den Aufbau kann die Miscella kontinuierlich abgezogen werden. Alternativ kann der Extraktor auch mit Lösungsmittel geflutet und erst nach einer gewissen Verweildauer abgezogen werden. In dieser Ausführung wird mit separaten Spülungen des Extraktionsgutes gearbeitet, so dass von Spülung zu Spülung der Ölgehalt der Miscella und des Extraktionsgutes reduziert wird. Die Anzahl der möglichen Spülungen hängt dabei direkt mit der Anzahl und dem Volumen der Tanks ab, welche zur Lagerung das Lösungsmittels und der Miscella mit unterschiedlichem Ölanteil zur Verfügung stehen. Je nach Ausführung ist es auch möglich, das Lösungsmittel ohne ausschleusen direkt im Extraktionskessel aus dem Extraktionsgut zu entfernen, in dem heißer Dampf eingeleitet wird. Batchanlagen gehören zu den sogenannten Tiefbettanlagen.

Von ihnen zu unterscheiden sind die sogenannten Flachbettanlagen, welche für einen kontinuierlichen Materialstrom ausgelegt sind und entsprechend in Großanlagen zum Einsatz kommen. Das Extraktionsgut wird hier mit einer relativ geringen Betttiefe von 0,3 bis 1,2 m Dicke auf einen Siebboden aufgebracht, so dass das von oben aufgebrachte Extraktionsmittel durch das Materialbett perkolieren kann. Der Siebboden kann hierbei als Förderband ausgelegt sein und sich mit dem Material weiter bewegen oder auch fest als Rinne ausgeführt sein. In diesem Falle wird das Extraktionsgut durch Schnecken oder Kettenzüge vorwärts bewegt. Unterhalb des Siebbodens befindet sich bei beiden Ausführungen ein in Sektionen unterteilter Auffangbehälter für die Miscella. Die Miscella wird jeweils von einer Sektion auf das Material der Folgesektion gepumpt und aufgefangen. Die Anzahl der Sektionen ist hierbei ausführungs- und materialabhängig und beträgt meist zwischen vier und zwölf, wobei sieben bis acht Sektionen am häufigsten vorkommen. In der ersten Sektion des Miscellatanks, über der das frische, gerade eingeschleuste Material liegt, befindet sich die Miscella mit dem höchsten Ölanteil, welche nicht wieder zur Extraktion eingesetzt wird, sondern zur Destillation und damit zur Ölgewinnung geht. In der letzten Sektion, welche sich unterhalb des Materials befindet, welches mit frischem/reinem Lösungsmittel behandelt und anschließend ausgeschleust wird, befindet sich die Miscella mit dem geringsten Ölanteil. Der Vorteil dieser Anlagen liegt im kontinuierlichen Betrieb. Allerdings sind im Vergleich zu Batchanlagen etwas höhere Sicherheitsstandards notwendig, da für den Entzug des Lösungsmittels durch Dampfdestillation das Hexan enthaltende, entölte Extraktionsgut aus dem Extraktor geschleust werden muss.

Gemeinsam ist allen industriell relevanten Methoden, dass das Öl enthaltende Material, wie Ölsaaten, Ölfrüchte und Ölsande, einen Wassergehalt von weniger als 20 %, besser weniger als 10 % und bevorzugt um die 7 %, aufweisen sollte, um eine effiziente Gewinnung des Öls zu erlauben. Ist der Wasseranteil beim Pressen zu hoch, wird hauptsächlich Wasser und nur ein geringer Ölanteil aus dem Material gepresst. Ähnlich nachteilig wirkt sich ein hoher Wassergehalt bei der Ölextraktion mittels Hexan oder einem anderen unpolarem Lösungsmittel aus, wie z.B. Benzin oder Kerosin. Ist der Wasseranteil zu hoch (> 10 %), so behindert das Wasser das Eindringen des hydrophoben Lösungsmittels in das Material und damit die Lösung des Öls. Der gewinnbare Ölanteil kann so auf ein nicht mehr kostendeckendes Maß sinken, die Ölgewinnung wird unwirtschaftlich. Für eine wirtschaftlich interessante Ölgewinnung mittels der genannten Methoden muss der Wasseranteil entsprechend durch trockene Lagerung oder aktive Trocknung reduziert werden. Insbesondere die aktive Trocknung bedingt, dass erhebliche Energiemengen aufgebracht werden müssen, um das Material auf einen geeigneten Wassergehalt zu trocknen. Dies ist immer dann ein relevanter Faktor, wenn das Rohmaterial einen hohen Wasseranteil von mehr als 20 % besitzt und durch diesen Wassergehalt zur Fermentation oder Faulen neigt und dadurch unbrauchbar wird. Dies tritt besonders bei organischen Materialien, wie z.B. Algen, frisch geernteten Ölsaaten und ölhaltigen Abfallstoffen der Lebensmittelindustrie, wie beispielsweise Kaffeegrund, auf.

Enthält ein Material z.B. 30 Gew.-% Öl in der Trockenmasse und hat im Rohzustand einen Wassergehalt von 55 Gew.-%, so ergeben sich folgende Anteile bei einer Tonne feuchtem Material: 550 kg Wasser, 315 kg Grundmaterial und 135 kg Öl. Um das Material auf einen Feuchtigkeitsgrad von 10 % zu bringen, müssten also 500 kg oder eine halbe Tonne Wasser verdampft werden. Kann dies nicht über lange Lagerzeiten erzielt werden, so muss dies unter Energieeinsatz erfolgen, was erhebliche Kosten verursacht und auch die Qualität des Öls durch oxidativen Stress negativ beeinflussen kann. Da die Verdampfungsenthalpie von Wasser bei 2,26 MJ/kg liegt, sind mindestens 1130 MJ (500 kg · 2,26 MJ/kg) nötig, um das Material zu trocknen, wofür mindestens 28,25 kg Erdgas mit einem Heizwert von 40 MJ/kg aufgewendet werden müssten, was einen erheblichen Aufwand und Verbrauch von Ressourcen bedeutet. Eine Möglichkeit, ohne vorherige Trocknung und ohne aufwendige Spezialanlagen Öl aus feuchten Rohmaterialien zu extrahieren, ist in Zeiten steigender Energiepreise und steigendem Umweltbewusstseins wünschenswert.

Aus den Patenten DD 229148 A1 von 1984 und US 8273248 B1 von 2012 sind Verfahren bekannt, mit welchen Öl aus Materialien mit höherem Feuchtigkeitsgrad gewonnen werden kann.

DD 229 148 A1 beschreibt ein Verfahren, welches mit bis zu 20 % Wassergehalt im Material eine hinreichend effiziente Ölextraktion erlaubt. Dies wird durch eine Vorbehandlung des Extraktionsgutes mit Alkohol oder Alkoholmischungen erreicht, wobei die Menge des zugegebenen Alkohols zwischen 5 bis 7 % des Wasseranteils im Extraktionsgut betragen soll. Nach der Behandlung mit Alkohol folgt eine einfache Extraktion mit Hexan oder einem anderen Alkan oder einem Alkangemisch (Benzin, Kerosin).

US 8273248 B1 beschreibt ein Verfahren spezifisch für die Extraktion von Öl aus Algen, welches nach einem Trocknungsschritt konsekutive Extraktionsschritte enthält. Zuerst wird der Wassergehalt reduziert und Alkohol oder ein Alkoholgemisch zu den Algen gegeben. Anschließend wird Hexan, ein anderes Alkan oder ein Alkangemisch zugegeben. Die einzelnen Anteile werden dann miteinander vermengt und ruhen gelassen. Während des Ruhens der Mischung, kommt es zu einer Phasenseparation der Alkanphase und der Wasser-Alkohol-Phase, welche getrennt werden. Aus den Phasen können Öl und Proteine gewonnen werden. Für eine effiziente Gewinnung muss der Prozess mehrmals wiederholt werden. Auch sind für den im Patent US 8273248 B1 genannten Prozess spezielle Extraktionsanlagen nötig, welche über Anlagen zu Trennung der Phasen verfügen. Zwar können beide Verfahren aus feuchten Materialien Öl gewinnen, doch sind immer noch entweder energieaufwändige Trocknungsschritte, mehrfache Extraktions- und Separationsschritte oder spezielle Anlagen nötig. Alles dies sind Faktoren, welche hohe Kosten verursachen und die Ölgewinnung unprofitabel machen können.

Das Patent WO 2012/138382 A1 offenbart eine Methode zur Extraktion von polaren Lipiden aus Algen mittels des Einsatzes verschiedener Extraktionsmittel und insbesondere von Lösungsmitteln mit Alkoholüberschuss. Insbesondere werden keine Pflanzenöle im Sinne von Triglyceriden (neutrale Lipide) und Fettsäuren aus feuchtem Material extrahiert, sondern polare Lipide. Nachteilig sind Entwässerungs- und Trocknungsschritte, ein integraler Teil des dargestellten Prozesses, während diese in der vorliegenden Erfindung ausgeschlossen bzw. auf ein Minimum reduziert sind.

In der EP 0617119A2 wird eine Methode zur gleichzeitigen Extraktion von hydrophobe Triterpenoide wie Azadirachtin und Öl aus der trockenen Saat des Neembaumes beschrieben. Nachteilig werden lediglich trockene Materialien extrahiert und die offenbarten Extraktionslösungen besitzen alle einen Überschuss an Alkohol. Das dargestellte Verfahren ist nicht auf die Gewinnung des Öls sondern auf die Gewinnung von hydrophilen Bestandteilen optimiert.

Patent DE 69623762 T2 beschreibt eine Methode zur Gewinnung von Terpenen, wie Cafestolester, Kahweolester und Isocafestolester durch eine Behandlung des Kaffeesatzes mit Phosphorsäure und anschließender Extraktion der Terpene. Nachteilig muss der Kaffeesatz vor der Extraktion getrocknet werden. Mit extrahiertes Öl wird als Verschmutzung der Terpene genannt und soll nicht aus dem Kaffeesatz gewonnen werden.

US 2010/0287823 A1 offenbart ein Verfahren zur Gewinnung von Biokraftstoffen aus gemahlenem Kaffee. Dabei wird der Kaffee zunächst mit Wasser behandelt und anschliessend zur Gewinnung der Triglyceride mit einem organischen Lösungsmittel wie beispielsweise Methanol, Ethanol, Hexan oder Mischungen aus organischen Lösungsmitteln behandelt. In einer Ausführungsform wird das Wasser von dem gemahlenen Kaffee vor der Extraktion durch beispielsweise Gefriertrocknung oder Destillation getrennt.

Der vorliegenden Erfindung liegt die Aufgabe zugrunde ein einfaches, universell anwendbares, effizientes, ökonomisches Verfahren zur Extraktion ölhaltiger Bestandteile aus noch feuchten Kaffeebohnen und/oder feuchten Reststoffen der Kaffeeproduktion bereitzustellen.

Die Aufgabe wird gelöst durch ein Verfahren zur feuchten Extraktion von ölhaltigen Bestandteilen aus Kaffeebohnen und/oder Reststoffen der Kaffeeproduktion, wobei die Kaffeebohnen und/oder Reststoffe der Kaffeeproduktion einen Restfeuchtegehalt von 10 bis 95 Ma-%, besonders bevorzugt von 30 bis 85 Ma.-%, ganz besonders bevorzugt von 45 bis 85 Ma.-%, gemessen an der Gesamtmasse der Kaffeebohnen und/oder Reststoffe der Kaffeeproduktion, mit einem Extraktionsmittelgemisch bestehend aus mindestens jeweils einem polaren und einem unpolaren Lösungsmittel extrahiert werden und wobei das Extraktionsmittelgemisch das mindestens eine unpolare Lösungsmittel zu einem Anteil von 45 bis 95 Vol-%, gemessen am Gesamtvolumen des Extraktionsmittels enthält.

Extraktion bezeichnet im Sinne der Erfindung das Herauslösen von mindestens einem Stoff aus dem Extraktionsgut Kaffeebohnen und/oder Reststoffe der Kaffeeproduktion mit einem flüssigen Extraktionsmittelgemisch. Feuchte Extraktion bezeichnet eine Extraktion, bei der noch feuchtes Extraktionsgut, mit einem Restfeuchtegehalt, eingesetzt wird.

Ölhaltige Bestandteile umfasst erfindungsgemäß alle Stoffe, die mit dem erfindungsgemäßen Extraktionsmittelgemisch aus dem Extraktionsgut Kaffeebohnen und/oder Reststoffe der Kaffeeproduktion extrahiert werden können. Bevorzugt handelt es sich bei den ölhaltigen Bestandteilen um Fettsäureester, insbesondere Triglyceride und pflanzliche Fette.

Kaffeebohnen bezeichnet im Sinne der Erfindung alle Arten von Kaffeebohnen, sowohl geröstet als auch ungeröstet sowie Mischungen dieser. Die Kaffeebohnen können vorbehandelt, wie beispielsweise sortiert oder gemahlen sein. Gemahlene, nicht extrahierte/gebrühte Kaffeebohnen werden auch als Kaffeemehl bezeichnet.

Reststoffe der Kaffeeproduktion umfassen erfindungsgemäß alle Arten von Rückständen (auch Kaffeereste), sowohl Abfall- und Nebenprodukte aus der Kaffeeindustrie. Dazu zählen beispielsweise Kaffeegrund, Kaffeemehl, Separator- und Dekanterschlämme sowie Mischungen aus diesen. Reststoffe fallen beispielsweise bei der industriellen Löskaffeeproduktion sowie in privaten Haushalten oder der Gastronomie an.

Die industrielle Herstellung von Löskaffee umfasst im Wesentlichen folgende Schritte, wobei die technische Ausführung in Details je nach Firma voneinander abweichen können: Die Bohnen werden geröstet und zu Kaffeemehl gemahlen. Das Kaffeemehl wird anschließend durch heißes Wasser und gegebenenfalls unter Druck mehrfach extrahiert (gebrüht), so dass ein Kaffeeextrakt (auch vulgo Kaffee) und ein Kaffeegrund (gebrühtes Kaffeemehl) entstehen. Der Kaffeeextrakt wird anschließend durch Dekanter und Separatoren von Kaffeegrundrückständen gereinigt, zurückgebliebener Kaffeegrund wird als Separator- und Dekanterschlamm bezeichnet. Kaffeeextraktrückstände werden mittels Bandpressen oder anderer Techniken aus dem Kaffeegrund entfernt und nach Reinigung mittels Dekantern und Separatoren wieder der Produktion zugeführt. Anschließend wird der Kaffeeextrakt konzentriert und gefrier- oder sprühgetrocknet, so dass Löskaffeepulver entsteht. Kaffeegrund, Separator- und Dekanterschlämme werden in der Industrie als Abfall betrachtet und der thermischen Verwertung zugeführt. Vorteilhaft können sie aufgrund ihres hohen Wasser- und Ölgehalts dem erfindungsgemäßen Verfahren zugeführt werden.

Kaffeegrund bezeichnet erfindungsgemäß die Überreste des Kaffees, insbesondere des Kaffeepulvers und/oder Kaffeemehls, nachdem dieses beispielsweise einem Brühvorgang unterzogen wurde. Kaffeegrund entsteht unter anderem bei der Trinkkaffeezubereitung aber auch bei der Produktion von löslichem Kaffee als Abfallprodukt.

Vorteilhaft können auch Mischungen aus Kaffeebohnen und Resten der Kaffeeproduktion eingesetzt werden.

Restfeuchtegehalt ist erfindungsgemäß der Gehalt an Wasser, der sich in den Kaffeebohnen und/oder den Reststoffen der Kaffeeproduktion befindet.

Extraktionsmittelgemisch ist eine Mischung aus Lösungsmitteln, die zur Extraktion der ölhaltigen Bestandteile verwendet werden können. Vorteilhaft lösen sich die ölhaltigen Bestandteile zumindest teilweise im Extraktionsmittelgemisch. Nach der Extraktion befinden sich die extrahierten öligen Bestandteile gelöst und/oder ungelöst im Extraktionsmittelgemisch. Das Extraktionsmittelgemisch besteht aus einem polaren und einem unpolaren Lösungsmittel. Lösungsmittel werden nach ihrer Polarität (Hydrophilie) eingeteilt. Polar und unpolar beziehen sich im Sinne der Erfindung auch darauf, welches Lösungsmittel beim Vergleich zweier Lösungsmittel das polarere oder unpolarere Lösungsmittel ist. Aufschluss darüber gibt beispielsweise die Elutrope Reihe.

Bevorzugt sind das polare und das unpolare Lösungsmittel unbegrenzt miteinander, zu mindestens aber in den angegebenen Volumenanteilen, mischbar. Bevorzugt ist das polare Lösungsmittel mit dem mindestens einem zu extrahierenden ölhaltigen Bestandteil mischbar.

Bevorzugt wird als mindestens ein unpolares Lösungsmittel, Benzin, Kerosin, Toluol, ein Alkan mit einer Kettenlänge von 5 bis 25 Kohlenstoffatomen oder eine Mischung aus diesen verwendet. Besonders bevorzugt wird ein Alkan mit einer Kettenlänge von 5 bis 12 Kohlenstoffatomen, ganz besonders bevorzugt ausgewählt aus n-Pentan, iso-Pentan, iso-Hexan, n-Heptan, n-Octan, noch mehr bevorzugt n-Hexan, verwendet.

Alkan bezeichnet erfindungsgemäß gesättigte, acyclische Kohlenwasserstoffe mit der allgemeinen Formel CₙH₂ₙ₊₂, wobei n ganzzahlig ist. Das Alkan kann sowohl aus einem linearen Kohlenstoffgerüst, als auch aus deren Isomeren und auch verzweigten Kohlenstoffketten bestehen.

Bevorzugt wird als polares Lösungsmittel ein Alkohol mit einer Kettenlänge von einem bis 10 Kohlenstoffatomen, besonders bevorzugt von einem bis 6 Kohlenstoffatomen, ganz besonders bevorzugt ausgewählt aus Methanol, Ethanol, Propanol, Butanol und Hexanol, noch mehr bevorzugt 2-Propanol, verwendet.

Erfindungsgemäß enthält das Extraktionsmittelgemisch das unpolare Lösungsmittel zu einem Anteil von 45 bis 95 Vol-%, besonders bevorzugt von 55 bis 85 Vol-%, ganz besonders bevorzugt von 55 bis 75 Vol-%, noch mehr bevorzugt von 60 Vol-%, gemessen am Gesamtvolumen des Extraktionsmittels.

Für die in diesem Patent dargestellte Feuchtextraktion werden Mischungen von mindestens einem polaren und einem unpolaren Lösungsmittel genutzt, meist ein Alkan und ein Alkohol. Geeignete Mischungen für die hier dargestellte Feuchtextraktion sind dabei Mischungen mit einem Alkananteil von mindestens 50 Gew.-%, bevorzugt zwischen 55 und 95 Gew.-% und insbesondere zwischen 55 Gew-% und 85 Gew.%.

Bevorzugt enthält das Extraktionsgemisch das mindestens eine polare Lösungsmittel zu einem Anteil von 5 bis 55 Vol-%, besonders bevorzugt zu 15 bis 45 Vol.-%, ganz besonders bevorzugt zu 25 bis 45 Vol.-%, noch mehr bevorzugt von 40 Vol.-%, gemessen am Gesamtvolumen des Extraktionsmittels.

Bevorzugt enthält das Extraktionsgemisch weitere polare und/oder unpolare Lösungsmittel mit einem Volumenanteil von 0,5 bis 40 Vol-%, besonders bevorzugt von 0,5 bis 35 Vol-%, ganz besonders bevorzugt von 0,5 bis 19 Vol-%, gemessen am Gesamtvolumen des Extraktionsmittelgemisches. Die weiteren polaren und/oder unpolaren Lösungsmittel sind aus den erfindungsgemäßen polaren und unpolaren Lösungsmitteln ausgewählt.

Alternativ aber nicht ausschließlich können auch binäre, tertiäre oder höhere Mischungen verschiedener Alkohole wie Methanol, Ethanol, Propanol und Butanol usw. als alkoholische Phase und Mischungen von Pentan, Hexan, Heptan, Benzin oder Kerosin und dergleichen als Alkanphase genutzt werden. Aber auch Mischungen auf der Basis von Aceton und Toluol sind möglich.

Bei der Einstellung der Mischung sollte darauf geachtet werden, dass der Alkoholanteil sowohl mit Wasser als auch mit der Alkanphase mischbar ist. Ist dies erfüllt, ist es möglich, feuchte Materialien direkt zu extrahieren, ohne eine Trocknung oder nur eine geringe Trocknung vorzunehmen.

Bevorzugt wird das Extraktionsmittelgemisch mit einer Temperatur oberhalb der Umgebungstemperatur aber unterhalb des Siedepunktes des am niedrigsten siedenden Lösungsmittels bzw. des am niedrigsten siedenden Azeotropes des Extraktionsmittelgemisches, eingesetzt wird. Ein Azeotrop ist eine Mischung von mindestens zwei Lösungsmitteln, deren Dampfphase die gleiche Zusammensetzung hat wie die flüssige Phase, wodurch eine destillative Trennung der mindestens zwei Lösungsmittel nicht möglich ist..

Die Effizienz des Extraktionsprozesses steigt dabei wie alle chemischen und physikalischen Prozesse mit steigender Temperatur. Die maximale Arbeitstemperatur entspricht dabei dem Siedepunkt der flüchtigsten Komponente der Extraktionslösung, welche auch ein Azeotrop verschiedener Komponenten sein kann.

Vorteilhaft wird die Temperatur auch nur so hoch gewählt, dass die zu extrahierenden ölhaltigen Bestandteile nicht negativ durch die einwirkende Wärme verändert werden.

Bevorzugt ist ein warmes Extraktionsmittelgemisch mit einer Temperatur von 35 bis 69°C, ganz besonders bevorzugt von 50 bis 65°C, ganz besonders bevorzugt von 58 bis 63°C. Vorteilhaft liegt die Temperatur nur geringfügig (0 bis 6°C) unterhalb des Siedepunktes von n-Hexan (Siedepunkt: 69°C).

Vorteilhaft wird durch den Einsatz eines warmen Extraktionsmittelgemisches der Extraktionsgrad erhöht, d.h. es kann mit einem Extraktionsmittelgemisch mit erhöhter Temperatur eine größere Menge ölhaltiger Bestandteile entfernt werden als mit dem gleichen Volumen des gleichen Extraktionsmittelgemisches welches lediglich Umgebungstemperatur aufweist.

Bevorzugt werden Kaffeebohnen und/oder Reststoffe der Kaffeeproduktion mit einer durchschnittlichen Korngröße von 0,001 bis 10 mm, besonders bevorzugt von 0,01 bis 5 mm, ganz besonders bevorzugt von 0,01 bis 2 mm eingesetzt. In einer besonderen Ausgestaltung der Erfindung weisen die Kaffeebohnen und/oder Reststoffe der Kaffeeproduktion zu mindestens 30 Ma-%, gemessen am Gesamtgewicht der Kaffeebohnen und/oder Reststoffe der Kaffeeproduktion, eine durchschnittliche Korngröße von kleiner gleich 2 mm auf.

Korngröße bezeichnet im Sinne der Erfindung die durchschnittliche Größenverteilung der Partikel innerhalb eines Gemenges an Kaffeebohnen und/oder Reststoffen der Kaffeeproduktion.

Für die Effizienz des Prozesses ist es vorteilhaft, wenn das öltragende Material so fein wie möglich ist. Je kleiner die Partikel des öltragenden Materials, desto schneller und effizienter kann das Extraktionsmittel eindringen und das Öl lösen. Ist das Verhältnis von Oberfläche zu Volumen zu klein, dauert das Eindringen des Extraktionsmittels zu lange und auch verbleiben erhebliche Mengen des Extraktionsmittels in dem Material, nachdem die Miscella abgezogen wurde. Miscella bezeichnet ein Stoffgemisch aus einem Extraktions(-gemisch) und mindestens einem extrahierten Öl.

Alternativ oder in Kombination kann das öltragende Material auch vorher gemahlen werden, um eine optimale Materialgröße zu erhalten. Die maximale Partikelgröße sollte dabei unter 5 mm liegen und besser noch unter 2 mm. Insbesondere sind Partikelgrößen unter 1 mm anzustreben, wobei mindestens 30 Gew.-% des öltragenden Materials eine Partikelgröße kleiner als 2 mm im trockenen Zustand aufweisen sollten.

Bevorzugt werden Kaffeebohnen und/oder Reststoffe der Kaffeeproduktion mit einem Gehalt an ölhaltigen Bestandteilen von 5 bis 60 Ma-% in der Trockenmasse (i. Tr.), besonders bevorzugt von 10 bis 45 Ma-% i. Tr., ganz besonders bevorzugt von 15 bis 35 Ma-% i. Tr., gemessen an der Gesamttrockenmasse der Kaffeebohnen und/oder Reststoffe der Kaffeeproduktion, eingesetzt.

Gesamttrockenmasse bezeichnet erfindungsgemäß die Gesamtmasse der Kaffeebohnen und/oder Reststoffe der Kaffeeproduktion nach dessen vollständiger Trocknung bis zur Massekonstanz.

Vorteilhaft können 50 bis 100 Ma-%, besonders bevorzugt 65 bis 99 Ma-%, ganz besonders bevorzugt 70 bis 99 Ma-% der ölhaltigen Bestandteile, gemessen an der Gesamtmasse der Kaffeebohnen und/oder der Reststoffe der Kaffeeproduktion extrahiert werden.
Bevorzugt werden die ölhaltigen Bestandteile nach der Extraktion von dem Extraktionsmittelgemisch destillativ getrennt.
Die Trennung der extrahierten ölhaltigen Bestandteile von dem Extraktionsmittelgemisch kann beispielsweise über mehrere Stufen erfolgen, wobei zunächst die an leichtesten flüchtige Komponente und dann sukzessive die schwerer flüchtigen Bestandteile abgetrennt werden. Vorteilhaft kann aus zurückgewonnenem Lösungsmittel wieder ein Extraktionsmittelgemisch hergestellt werden.
Durch Destillation der Miscella wird das Öl vom Lösungsmittel getrennt, wie in einem konventionellen Extraktionsprozess auf der Basis von Hexan als Extraktionsmittel. Durch die Destillation wird nicht nur das Öl von der Extraktionslösung getrennt, sondern es können auch die Komponenten des Extraktionsmittels voneinander separiert werden. Werden diese im selben Behälter aufgefangen und kombiniert, kann die Mischung wieder als Extraktionsmittel genutzt werden. Werden die einzelnen Komponenten getrennt, kann im laufenden Betrieb das Extraktionsmittel auf abweichende Eigenschaften des Extraktionsgutes angepasst werden, wenn der Aufbau der Anlage dies zulässt. Durch die unterschiedlichen Bestandteile des Extraktionsmittels haben die einzelnen Komponenten unterschiedliche Tendenz, im entölten Grundmaterial zu verbleiben. Dies führt dazu, dass sich die anteilige Zusammensetzung der Extraktionslösung mit der Zeit verändert und das Verhältnis der Bestandteile den voreingestellten, optimalen Bereich verlässt. Entsprechend ist es nötig, regelmäßig die Zusammensetzung der Extraktionsmischung zu prüfen und gegebenenfalls neu zu justieren. Dies kann beispielsweise über die Bestimmung der Dichte geschehen, aber auch andere Methoden wie Fluoreszenzmessungen sind denkbar. Auch können Fluoreszenzmessungen genutzt werden, um den Ölgehalt in der Miscella zu kontrollieren und zu bestimmen, wann Sättigung erreicht ist und das Solvens erneuert werden muss.
In einer besonderen Ausgestaltung der Erfindung werden zur Extraktion ölhaltiger Bestandteile aus Kaffeebohnen und/oder Reststoffen der Kaffeeproduktion Mischungen von 50 Gew.-% - 95 Gew.-% n-Hexan und 5 Gew.-% bis 50 Gew.-% 2-Propanol genutzt, um ohne Trocknung 70 - 98 Gew.-% des Öls aus Materialien (Kaffeebohnen und/oder Reststoffe der Kaffeeproduktion) mit einem Feuchtigkeitsgehalt zwischen 55 und 75 Gew.-% und einem Ölgehalt zwischen 15 und 35 Gew.-% in der Trockenmasse zu gewinnen.
Besonders zu bevorzugen ist dabei, dass auch das Öl mit der alkoholischen Phase mischbar und idealerweise auch in ihr lösbar ist. Ist dies gegeben, so ist es möglich über 90 % des Öls aus feuchten, ölhaltigem Material zu lösen und mittels Destillation vom Extraktionsmittel zu trennen, wie bei einem herkömmlichen Extraktionsverfahren mit n-Hexan als Solvens.
Der Prozess der Feuchtextraktion kann prinzipiell auf allen Anlagen gefahren werden, welche für die Hexanextraktion ausgelegt sind, wie Perkulations- und kontinuierliche Bandanlagen. Einzig muss die Destillationseinheit in der Lage sein, bei höheren Temperaturen betrieben zu werden, als bei der Nutzung von reinem Hexan, da die Alkohole meist höhere Siedepunkte als Hexan haben. Gegebenenfalls müssen Dichtungen genutzt werden, welche in der Lage sind sowohl Alkanen als auch Alkoholen zu wiederstehen. Auch ist hervorzuheben, dass aus dem Material Farb- und Schwebstoffe in das Extrakt übergehen können, welche normalerweise nicht bei einer reinen Hexanextraktion im Öl zu finden sind. Dies liegt an dem Alkoholanteil, welcher im gewissen Maße den Übergang hydrophiler Substanzen ermöglicht. Um diese aus dem Öl zu entfernen, kann ein weiterer Filterschritt in den Prozess integriert werden, welcher es erlaubt, eventuell vorhandene Schwebstoffe aus dem Öl zu entfernen. Die weitere Aufbereitung des Öls findet nach der Abscheidung vom Lösungsmittel und der Filtration in einer Ölraffiniere statt und ist nicht mehr Teil dieses Verfahrens. Auch kann durch eine Reduktion des Alkoholanteils der Prozess zu einem reineren Öl hin optimiert werden, wenn dadurch die Extraktionseffizienz nicht oder nur vertretbar leidet.
Je nach Material können entsprechend Zentrifugen oder Pressen nachgeschaltet sein, um verbleibende Extraktionslösung vom entölten Rohmaterial zu trennen.
Vorteilhaft werden durch das erfindungsgemäße Verfahren laufende und Anfangsinvestitionskosten gegenüber den vorher genannten konventionellen und nicht konventionellen Extraktionsverfahren deutlich reduziert. Das erfindungsgemäße Verfahren stellt somit ein einfaches und universell anwendbares, effizientes, ökonomisches Verfahren zur Extraktion von Pflanzenölen auf der Basis von Triglyceriden aus noch feuchten Materialien, wie Kaffeebohnen und/oder Reststoffen der Kaffeeproduktion, bereit. Vorteilhaft kann das erfindungsgemäße Verfahren auf allen konventionellen Extraktionsanlagen, wenn nötig mit minimalen Modifikationen, durchgeführt werden.
Überraschenderweise hat sich gezeigt, dass in einem Extraktionsmittelgemisch von polaren und unpolaren Lösungsmitteln mit einem höheren Anteil an unpolarem Lösungsmittel ölhaltige Bestandteile, wie beispielsweise Triglyceride, unabhängig vom Wassergehalt aus Pflanzen, wie Kaffeebohnen und/oder Reststoffen der Kaffeeproduktion, ohne Trocknung in sehr guten Ausbeuten extrahiert werden können.
Nach einer besonderen Ausgestaltung der Erfindung werden die Kaffeebohnen und/oder Reste der Kaffeeproduktion mehrfach mit frischem Extraktionsmittelgemisch extrahiert. Bevorzugt erfolgt die Extraktion ein bis 10 mal, besonders bevorzugt ein bis 7 mal, ganz besonders bevorzugt ein bis 5 mal, noch mehr bevorzugt drei mal. Vorteilhaft wird so der Extraktionsgrad gesteigert, d.h. es wird mehr ölhaltiger Bestandteil aus den Kaffeebohnen und/oder Resten der Kaffeeproduktion erhalten. Die einzelnen Extraktionsmittelgemische, die nach einer mehrfachen Extraktion der Kaffeebohnen und/oder Reste der Kaffeeproduktion mit jeweils frischem Extraktionsmittelgemisch erhalten werden, werden vorteilhaft vereinigt. Aus den vereinigten Extraktionsmittelgemischen werden die ölhaltigen Bestandteile destillativ entfernt.
Das vorliegende Verfahren behandelt im Wesentlichen eine Methode zur Erhöhung der Lösungseffizienz der Extraktion von feuchten Materialien, welche es erstmalig ermöglicht feuchte Materialien ohne vorherige Trocknung Energie- und Kosteneffizient zu extrahieren.

Anhand der aufgeführten Ausführungsbeispiele soll die Erfindung näher erläutert werden ohne sie auf diese zu beschränken.

### Beispiel 1 - Feuchte Extraktion mit industriellem Kaffeegrund

Für die Extraktion mittels binärer Extraktionslösungen wurde frischer, feuchter Robusta Kaffeegrund aus der industriellen Löskaffeeproduktion mit einem Wassergehalt von 68 % und einem Ölgehalt von 17,3 % in der Trockenmasse verwendet.

Portionen von je 27 und 28 g feuchten Kaffeegrund wurden jeweils in einen Filter mit einer Porengröße von 100 µm gegeben und in einem Becherglas platziert. Die Bechergläser wurden jeweils mit 100 ml Extraktionslösung zusammengesetzt aus verschiedenen Mischungen von n-Hexan und 2-Propanol mit Volumenanteilen zwischen 45:55 und 85:15 gefüllt und ein Becherglas mit reinem Hexan. Sowohl die Mischungen als auch das reine Hexan waren auf 60 °C erwärmt. Die Proben wurde 10 min in den Extraktionslösungen belassen und anschließend entnommen. Den Proben wurde eine weitere Minute zum Abtropfen gegeben. Anschließend wurden die gewonnenen Miscellae destilliert und das gewonnene Öl gravimetrisch bestimmt. Der Kaffeegrund wurde ebenfalls getrocknet um die jeweilige Masse der Probe zu bestimmen und somit die maximal mögliche zu gewinnende Ölmenge zu bestimmen. Diese theoretische Ölmenge und die tatsächlich gewonnene Ölmenge wurden anschließend in Verhältnis gesetzt. Mittels Feuchtextraktion konnten zwischen 50 und 95 Ma-% des Öls gewonnen werden, wobei die Ausbeute bei einem n-Hexananteil von 70 und 85 Vol.-% zwischen 90 und 97 % lag. Jenseits dieses optimalen Bereiches fiel die Extraktionseffizienz rapide ab und lag bei reinem n-Hexan (100 Vol.-%) bei 0% Ausbeute.

### Beispiel 2 - Feuchte Extraktion mit Dekanterschlamm aus der Löskaffeeproduktion

Für die Feuchtextraktion wurde frischer, feuchter Dekanterschlamm aus der Löskaffeeprodution mit einem Wassergehalt von 75,4 % und einem Ölgehalt von 14,6 % in der Trockenmasse verwendet. Der Dekanterschlamm entstammte der industriellen Löskaffeeproduktion. Portionen zwischen 42 und 43 g feuchten Dekanterschlamms wurden jeweils in einem Becherglas platziert und in 48 bis 49 g Extraktionslösung bei 60°C dispergiert. Bei den Extraktionslösungen handelte es sich um verschiedene Mischungen von n-Hexan und 2-Propanol mit Volumenanteilen zwischen 45:55 und 70:30. Das Material verblieb für 20 min in den Extraktionslösungen. Die Miscella wurden anschließend filtriert und destilliert und die gewonnene Ölmenge gravimetrisch bestimmt. Mittels Feuchtextraktion konnten zwischen 50 und 99 Ma-% des Öls aus Dekanterschlamm ohne Trocknung gewonnen werden.

### Beispiel 3 - Feuchte Extraktion mit industriellem Arabica Kaffeegrund

Für die Untersuchung wurde tiefgefrorener industrieller Arabica Kaffeegrund mit 60,4 % Restfeuchtigkeit und einem Ölgehalt von 31,2 % i. Tr. untersucht. Dem Kaffeegrund wurde zum Auftauen für 24 h im Kühlschrank bei 7°C gelagert. Für die Untersuchungen wurde eine 65:35 (n-Hexan:2-Propanol) Extraktionslösung genutzt. 50 g Kaffeegrund wurden in einen Filter gegeben und in einem Becherglas platziert. Die Probe wurde mit 100 ml Extraktionsmittelgemisch, erwärmt auf 60°C, aufgegossen und 15 min ruhen gelassen. Anschließend wurde die Miscella abgezogen und dreimal mit je 30 ml warmen Extraktionsmittelgemisch gespült. Es konnten auf diese Weise 89 % des Öls gewonnen werden, während ein Versuch mit warmen n-Hexan eine Ausbeute von weniger als 1 % erbrachte.

## Patentansprüche

1. Verfahren zur feuchten Extraktion von ölhaltigen Bestandteilen aus Kaffeebohnen und/oder Reststoffen der Kaffeeproduktion, wobei die Kaffeebohnen und/oder Reststoffe der Kaffeeproduktion mit einem Restfeuchtegehalt von 10 bis 95 Ma-%, gemessen an der Gesamtmasse der Kaffeebohnen und/oder Reststoffe der Kaffeeproduktion, mit einem Extraktionsmittelgemisch bestehend aus mindestens jeweils einem polaren und einem unpolaren Lösungsmittel extrahiert werden und wobei das Extraktionsmittelgemisch das mindestens eine unpolare Lösungsmittel zu einem Anteil von 45 bis 95 Vol-%, gemessen am Gesamtvolumen des Extraktionsmittels, enthält.

2. Verfahren nach Anspruch 1, **dadurch gekennzeichnet, dass** als mindestens ein unpolares Lösungsmittel Benzin, Kerosin, Toluol, ein Alkan mit einer Kettenlänge von 5 bis 25 Kohlenstoffatomen oder eine Mischung aus diesen, verwendet wird.

3. Verfahren nach einem der Ansprüche 1 oder 2, **dadurch gekennzeichnet, dass** als mindestens ein polares Lösungsmittel ein Alkohol mit einer Kettenlänge von einem bis 10 Kohlenstoffatomen verwendet wird.

4. Verfahren nach einem der Ansprüche 1 bis 3, **dadurch gekennzeichnet, dass** das Extraktionsmittelgemisch das mindestens eine polare Lösungsmittel zu einem Anteil von 5 bis 55 Vol-%, gemessen am Gesamtvolumen des Extraktionsmittels, enthält.

5. Verfahren nach einem der Ansprüche 1 bis 4, **dadurch gekennzeichnet, dass** das Extraktionsmittelgemisch weitere polare und/oder unpolare Lösungsmittel mit einem Volumenanteil von insgesamt 0,5 bis 40 Vol.-%, gemessen am Gesamtvolumen des Extraktionsmittelgemisches, enthält.

6. Verfahren nach einem der Ansprüche 1 bis 5, **dadurch gekennzeichnet, dass** das Extraktionsmittelgemisch mit einer Temperatur oberhalb der Umgebungstemperatur aber unterhalb des Siedepunktes des am niedrigsten siedenden Lösungsmittels bzw. des am niedrigsten siedenden Azeotropes des Extraktionsmittelgemisches eingesetzt wird.

7. Verfahren nach einem der Ansprüche 1 bis 6, **dadurch gekennzeichnet, dass** Kaffeebohnen und/oder Reststoffe der Kaffeeproduktion mit einer durchschnittlichen Korngröße von 0,001 bis 10 mm eingesetzt werden.

8. Verfahren nach einem der Ansprüche 1 bis 7, **dadurch gekennzeichnet, dass** Kaffeebohnen und/oder Reststoffe der Kaffeeproduktion mit einem Gehalt an ölhaltigen Bestandteilen von 5 bis 60 Ma-%, gemessen, an der Gesamttrockenmasse der Kaffeebohnen und/oder Reststoffe der Kaffeeproduktion, eingesetzt werden.

9. Verfahren nach einem der Ansprüche 1 bis 8, **dadurch gekennzeichnet, dass** die ölhaltigen Bestandteile nach der Extraktion von dem Extraktionsmittelgemisch destillativ getrennt werden.

## Claims

1. Method for the wet extraction of oil-containing components from coffee beans and/or residual products of coffee production, wherein the coffee beans and/or residual products of coffee production, having a residual moisture content from 10 to 95 percent by mass, based on the total mass of the coffee beans and/or residual products of coffee production, are extracted by means of an extracting agent mixture consisting of at least one polar and at least one nonpolar solvent, and wherein the extracting agent mixture contains the at least one nonpolar solvent in a proportion of from 45 to 95 vol.%, based on the total volume of the extracting agent.

2. Method according to claim 1, **characterised in that** benzine, kerosene, toluene, an alkane having a chain length of from 5 to 25 carbon atoms, or a mixture thereof, is used as at least one nonpolar solvent.

3. Method according to either claim 1 or claim 2, **characterised in that** an alcohol having a chain length of from 1 to 10 carbon atoms is used as at least one polar solvent.

4. Method according to any of claims 1 to 3, **characterised in that** the extracting agent mixture contains the at least one polar solvent in a proportion of from 5 to 55 vol.%, based on the total volume of the extracting agent.

5. Method according to any of claims 1 to 4, **characterised in that** the extracting agent mixture contains additional polar and/or nonpolar solvents having a volume proportion of from 0.5 to 40 vol.% in total, based on the total volume of the extracting agent mixture.

6. Method according to any of claims 1 to 5, **characterised in that** the extracting agent mixture is used at a temperature above ambient temperature but below the boiling point of the solvent of the extracting agent mixture having the lowest boiling point or the azeotrope of the extracting agent mixture having the lowest boiling point.

7. Method according to any of claims 1 to 6, **characterised in that** coffee beans and/or residual products of coffee production having an average particle size of from 0.001 to 10 mm are used.

8. Method according to any of claims 1 to 7, **characterised in that** coffee beans and/or residual products of coffee production having a content of oil-containing components of from 5 to 60 percent by mass, based on the total dry weight of the coffee beans and/or residual products of coffee production, are used.

9. Method according to any of claims 1 to 8, **characterised in that** the oil-containing components are separated by distillation after being extracted by the extracting agent mixture.

## Revendications

1. Procédé d'extraction humide de constituants oléagineux à partir de fèves de café et/ou de substances résiduelles de la production de café, dans lequel les fèves de café et ou les substances résiduelles de la production de café ayant une teneur en humidité résiduelle de 10 à 95 % en masse, mesurée par rapport à la masse totale des fèves de café et/ou des substances résiduelles de la production de café, sont soumises à extraction au moyen d'un mélange d'agent d'extraction constitué d'au moins un solvant polaire et un solvant non polaire respectivement, et dans lequel le mélange d'agent d'extraction contient l'au moins un solvant non polaire dans une proportion de 45 à 95 % en vol., mesurée par rapport au volume total de l'agent d'extraction.

2. Procédé selon la revendication 1, **caractérisé en ce que** l'on utilise, comme au moins un solvant non polaire, de l'essence, du kérosène, du toluène, un alcane ayant une longueur de chaîne de 5 à 25 atomes de carbone ou un mélange de ceux-ci.

3. Procédé selon l'une des revendications 1 ou 2, **caractérisé en ce que** l'on utilise, comme au moins un solvant polaire, un alcool ayant une longueur de chaîne de un à 10 atomes de carbone.

4. Procédé selon l'une des revendications 1 à 3, **caractérisé en ce que** le mélange d'agent d'extraction contient l'au moins un solvant polaire dans une proportion de 5 à 55 % en vol., mesurée par rapport au volume total de l'agent d'extraction.

5. Procédé selon l'une des revendications 1 à 4, **caractérisé en ce que** le mélange d'agent d'extraction contient d'autres solvants polaires et/ou non polaires dans une proportion en volume de 0,5 à 40 % en vol. au total, mesurée par rapport au volume total du mélange d'agent d'extraction.

6. Procédé selon l'une des revendications 1 à 5, **caractérisé en ce que** le mélange d'agent d'extraction est utilisé à une température supérieure à la température ambiante mais inférieure au point d'ébullition du solvant dont le point d'ébullition est le plus bas ou de l'azéotrope dont le point d'ébullition est le plus bas, du mélange d'agent d'extraction.

7. Procédé selon l'une des revendications 1 à 6, **caractérisé en ce que** des fèves de café et/ou des substances résiduelles de la production de café dont la taille moyenne des grains est de 0,001 à 10 mm, sont utilisées.

8. Procédé selon l'une des revendications 1 à 7, **caractérisé en ce que** des fèves de café et/ou des substances résiduelles de la production de café ayant une teneur en constituants oléagineux de 5 à 60 % en masse, mesurée par rapport à la masse sèche totale des fèves de café et/ou des substances résiduelles de la production de café, sont utilisées.

9. Procédé selon l'une des revendications 1 à 8, **caractérisé en ce que** les constituants oléagineux sont séparés du mélange d'agent d'extraction par distillation après l'extraction.
